# EUROPEAN PATENT APPLICATION

(11) **EP 4 339 861 A1**
(43) Date of publication of application: **20.03.2024**
(21) Application number: 22806355.8
(22) Date of filing: 01.04.2022
(51) Int. Cl.: G06Q 10/08

(54) **GOODS TRANSFER INFORMATION PROCESSING METHOD AND APPARATUS, DEVICE, AND STORAGE MEDIUM**

(30) Priority: 12.05.2021 CN 202110517976
(71) Applicant: Beijing Jingdong Qianshi Technology Co., Ltd., Beijing 100176 (CN)
(72) Inventor: CONG, Qing, Beijing 100176 (CN); MA, Ben, Beijing 100176 (CN); HAO, Guowei, Beijing 100176 (CN)
(74) Representative: Vossius & Partner Patentanwälte Rechtsanwälte mbB
(86) International application number: PCT/CN2022/084878
(87) International publication number: WO 2022/237385

(57) **Abstract**

Provided are a goods transfer information processing method and apparatus, a device, and a storage medium. The method comprises: associating non-homogeneous virtual resources corresponding to in-warehoused goods to a wallet address of a first user identifier in a blockchain network, the in-warehoused goods comprising goods to be ex-warehoused; acquiring ex-warehouse information, comprising an identifier of the goods to be ex-warehoused and a wallet address of a second user identifier in the blockchain network; and authorizing, according to the identifier of the goods to be ex-warehoused, a transfer operation on a non-heterogeneous virtual resource corresponding to the goods to be ex-warehoused, so that a second user terminal corresponding to the second user identifier performs the transfer operation, the transfer operation being an operation of transferring from the wallet address of the first user identifier to the wallet address of the second user identifier.

## Description

### CROSS REFERENCE

The present disclosure is proposed based on Chinese Patent Application No. 202110517976.6, entitled "Method for processing cargo allocation information, apparatus, device, and storage medium", filed on May 12, 2021, and claims priority to the Chinese Patent Application, the entire contents of which are incorporated herein by reference.

### TECHNICAL FIELD

The present disclosure relates to the field of Internet technology, and in particular, to a method for cargo allocation information, an apparatus, a device and a readable storage medium.

### BACKGROUND

With the increasing of business organization and products, cargo allocation between warehouses for storing products and cargoes becomes an important business process. In many cases, the cargoes between warehouses of different organizations are allocated to each other, and the source warehouse and the destination warehouse may relate to different organization entities, that is, change of the cargo owner (i.e., transfer of the cargo right) may be involved. When the coordination of the supply chain is not only between two enterprises, real, complete and reliable cargo state data cannot be obtained in real time through a centralized management system in related art. In some related art, the cargo right handover depends on paper allocation documents, and the paper allocation documents may be inconsistent with the data in the management system. For example, the state of the cargo may be abnormal, which brings great difficulty to the audit.

As described above, how to provide more accurate cargo allocation information is an urgent problem to be solved.

The above information disclosed in the background part is only used to enhance the understanding of the background of the present disclosure, so it may include information that does not constitute related art known to those of ordinary skill in the art.

### SUMMARY

An objective of the present disclosure is to provide a method for processing cargo allocation information, an apparatus, a device and a readable storage medium, to overcome the problem of inaccurate cargo allocation information caused by adoption of paper cargo allocation documents in the related art to at least some extent.

Other features and advantages of the present disclosure will become apparent from the following detailed description, or may be learned in part by the practice of the present disclosure.

According to an aspect of the present disclosure, there is provided a method for processing cargo allocation information, including: associating a non-fungible virtual resource corresponding to a warehouse-in cargo with a wallet address of a first user identification in a blockchain network, the warehouse-in cargo including a cargo to be warehouse-out; obtaining warehouse-out information, the warehouse-out information including an identification of the cargo to be warehouse-out and a wallet address of a second user identification in the blockchain network; and, performing authorization on a transfer operation for a non-fungible virtual resource corresponding to the cargo to be warehouse-out according to the identification of the cargo to be warehouse-out, so as to perform the transfer operation by a second user terminal corresponding to the second user identification, where the transfer operation is an operation of transferring from the wallet address of the first user identification to the wallet address of the second user identification.

According to an embodiment of the present disclosure, the method further includes: obtaining the non-fungible virtual resource corresponding to the warehouse-in cargo by mapping the warehouse-in cargo onto the blockchain network through invoking a non-fungible virtual resource protocol; associating the non-fungible virtual resource corresponding to the warehouse-in cargo with the wallet address of the first user identification in the blockchain network includes: associating the non-fungible virtual resource corresponding to the warehouse-in cargo with the wallet address of the first user identification in the blockchain network through invoking the non-fungible virtual resource protocol; and, performing authorization on the transfer operation for the non-fungible virtual resource corresponding to the cargo to be warehouse-out according to the identification of the cargo to be warehouse-out includes: performing authorization on the transfer operation for the non-fungible virtual resource corresponding to the cargo to be warehouse-out according to the identification of the cargo to be warehouse-out through invoking the non-fungible virtual resource protocol.

According to an embodiment of the present disclosure, the method further includes: performing query on the non-fungible virtual resource associated with the wallet address of the first user identification through invoking the non-fungible virtual resource protocol; and/or, performing query on a non-fungible virtual resource associated with the wallet address of the second user identification through invoking the non-fungible virtual resource protocol.

According to an embodiment of the present disclosure, obtaining the warehouse-out information includes: obtaining cargo allocation order information, the cargo allocation order information including cargo allocation information and second user information; obtaining the identification of the cargo to be warehouse-out according to the cargo allocation information; and, obtaining the wallet address of the second user identification according to the second user information; the method further includes: generating a warehouse-out document according to the cargo allocation order information; and, uploading the warehouse-out document to the blockchain network through a server.

According to an embodiment of the present disclosure, the method further includes: associating the warehouse-out document in the blockchain network with the transfer operation according to the first user identification.

According to an embodiment of the present disclosure, the method further includes: obtaining delivery information; generating a receipt confirmation document according to the warehouse-out document and the delivery information; and, uploading the receipt confirmation document to the blockchain network through an authentication organization node.

According to another aspect of the present disclosure, there is provided a method for processing cargo allocation information, including: obtaining warehouse-in information, the warehouse-in information including an identification of a cargo to be warehouse-in, a wallet address of a first user identification in a blockchain network, and a wallet address of a second user identification in the blockchain network; and, performing a transfer operation on a non-fungible virtual resource corresponding to the cargo to be warehouse-in according to the identification of the cargo to be warehouse-in, the transfer operation being an operation of transferring from the wallet address of the first user identification to the wallet address of the second user identification.

According to an embodiment of the present disclosure, obtaining the warehouse-in information includes: obtaining cargo allocation order information, the cargo allocation order information including cargo allocation information and first user information; obtaining the identification of the cargo to be warehouse-in according to the cargo allocation information; and, obtaining the wallet address of the first user identification according to the first user information; the method further includes: generating a warehouse-in confirmation document based on the cargo allocation order information; and, uploading the warehouse-in confirmation document to the blockchain network through a server.

According to still another aspect of the present disclosure, there is provided an apparatus for processing cargo allocation information, including: a virtual resource association module, configured to associate a non-fungible virtual resource corresponding to a warehouse-in cargo with a wallet address of a first user identification in a blockchain network, the warehouse-in cargo including a cargo to be warehouse-out; a warehouse-out information obtaining module, configured to obtain warehouse-out information, the warehouse-out information including an identification of the cargo to be warehouse-out and a wallet address of a second user identification in the blockchain network; and, a resource transfer authorization module, configured to perform authorization on a transfer operation for a non-fungible virtual resource corresponding to the cargo to be warehouse-out according to the identification of the cargo to be warehouse-out, so as to perform the transfer operation by a second user terminal corresponding to the second user identification, where the transfer operation is an operation of transferring from the wallet address of the first user identification to the wallet address of the second user identification.

According to an embodiment of the present disclosure, the apparatus further includes: a virtual resource mapping module, configured to obtain the non-fungible virtual resource corresponding to the warehouse-in cargo by mapping the warehouse-in cargo onto the blockchain network through invoking a non-fungible virtual resource protocol; the virtual resource association module is further configured to associate the non-fungible virtual resource corresponding to the warehouse-in cargo with the wallet address of the first user identification in the blockchain network through invoking the non-fungible virtual resource protocol; and, the resource transfer authorization module is further configured to perform authorization on the transfer operation for the non-fungible virtual resource corresponding to the cargo to be warehouse-out according to the identification of the cargo to be warehouse-out through invoking the non-fungible virtual resource protocol.

According to an embodiment of the present disclosure, the apparatus further includes: a virtual resource query module, configured to: perform query on the non-fungible virtual resource associated with the wallet address of the first user identification through invoking the non-fungible virtual resource protocol; and/or, perform query on a non-fungible virtual resource associated with the wallet address of the second user identification through invoking the non-fungible virtual resource protocol.

According to an embodiment of the present disclosure, the warehouse-out information obtaining module further includes: a first order information obtaining module, configured to obtain cargo allocation order information, the cargo allocation order information including cargo allocation information and second user information; a first cargo identification obtaining module, configured to obtain the identification of the cargo to be warehouse-out according to the cargo allocation information; and, a first wallet address obtaining module, configured to obtain the wallet address of the second user identification according to the second user information; the apparatus further includes: a first document generation module, configured to generate a warehouse-out document according to the cargo allocation order information; and a first document up-chaining module, configured to upload the warehouse-out document to the blockchain network through a server.

According to an embodiment of the present disclosure, the apparatus further includes a document association module configured to associate the warehouse-out document in the blockchain network with the transfer operation according to the first user identification.

According to an embodiment of the present disclosure, the apparatus further includes: a delivery information obtaining module, configured to obtain delivery information; a second document generation module, configured to generate a receipt confirmation document according to the warehouse-out document and the delivery information; and, a second document up-chaining module, configured to upload the receipt confirmation document to the blockchain network through an authentication organization node.

According to still another aspect of the present disclosure, there is provided an apparatus for processing cargo allocation information, including: a warehouse-in information obtaining module, configured to obtain warehouse-in information, the warehouse-in information including an identification of a cargo to be warehouse-in, a wallet address of a first user identification in a blockchain network, and a wallet address of a second user identification in the blockchain network; and, a resource transfer module, configured to perform a transfer operation on a non-fungible virtual resource corresponding to the cargo to be warehouse-in according to the identification of the cargo to be warehouse-in, the transfer operation being an operation of transferring from the wallet address of the first user identification to the wallet address of the second user identification.

According to an embodiment of the present disclosure, the warehouse-in information obtaining module includes: a second order information obtaining module, configured to obtain cargo allocation order information, the cargo allocation order information including cargo allocation information and first user information; a second cargo identification obtaining module, configured to obtain the identification of the cargo to be warehouse-in according to the cargo allocation information; and, a second wallet address obtaining module, configured to obtain the wallet address of the first user identification according to the first user information; the apparatus further includes: a third document generation module, configured to generate a warehouse-in confirmation document based on the cargo allocation order information; and, a third document up-chaining module, configured to upload the warehouse-in confirmation document to the blockchain network through a server.

According to still another aspect of the present disclosure, there is provided a device including: a memory, a processor, and an executable instruction stored in the memory and executable in the processor; when the processor executes the executable instruction, any one of the methods described above is implemented.

According to still another aspect of the present disclosure, there is provided a computer-readable storage medium with an executable instruction by a computer stored thereon; when the executable instruction is executed by a processor, any one of the methods described above is implemented.

According to the method for processing cargo allocation information provided by the embodiments of the present disclosure, a non-fungible virtual resource corresponding to a warehouse-in cargo including a cargo to be warehouse-out is associated with a wallet address of a first user identification in a blockchain network; warehouse-out information including an identification of the cargo to be warehouse-out and a wallet address of a second user identification in the blockchain network are obtained; authorization is performed on a transfer operation of transferring from the wallet address of the first user identification to the wallet address of the second user identification for a non-fungible virtual resource corresponding to the cargo to be warehouse-out according to the identification of the cargo to be warehouse-out, so as to perform the transfer operation by a second user terminal corresponding to a second user identification; and, transfer of the virtual resource corresponding to the actual cargo asset is completed through the blockchain network, so that the authenticity and reliability of the cargo allocation data can be ensured.

It should be understood that the above general description and the following detailed description are merely examples and cannot limit the present disclosure.

### BRIEF DESCRIPTION OF THE DRAWINGS

The above and other objectives, features, and advantages of the present disclosure will become more apparent from the detailed description of the example embodiments with reference to the accompanying drawings.
FIG. 1 shows a schematic diagram of a system structure according to an embodiment of the present disclosure.
FIG. 2 shows a flowchart of a method for processing cargo allocation information according to an embodiment of the present disclosure.
FIG. 3 shows a flowchart of another method for processing cargo allocation information according to an embodiment of the present disclosure.
FIG. 4 shows a flowchart of still another method for processing cargo allocation information according to an embodiment of the present disclosure.
FIG. 5 shows a schematic diagram of a warehouse-in confirmation document according to an embodiment of the present disclosure.
FIG. 6 is an information interaction diagram for cargo allocation illustrated according to an exemplary embodiment.
FIG. 7 shows a block diagram of an apparatus for processing cargo allocation information according to an embodiment of the present disclosure.
FIG. 8 shows a block diagram of another apparatus for processing cargo allocation information according to an embodiment of the present disclosure.
FIG. 9 shows a block diagram of still another apparatus for processing cargo allocation information according to an embodiment of the present disclosure.
FIG. 10 shows a block diagram of yet another apparatus for processing cargo allocation information according to an embodiment of the present disclosure.
FIG. 11 shows a schematic structural diagram of an electronic device according to an embodiment of the present disclosure.

### DETAILED DESCRIPTION

Example embodiments will now be described more fully with reference to the accompanying drawings. Example embodiments, however, can be implemented in various forms and should not be construed as limited to the embodiments set forth herein; by contrast, these embodiments are provided so that the present disclosure will be thorough and complete, and will fully convey the concept of example embodiments to those skilled in the art. The drawings are merely schematic illustrations of the present disclosure, and are not necessarily drawn to scale. The same reference numbers in the figures denote the same or similar parts, and thus their repeated description will be omitted.

Furthermore, the described features, structures, or characteristics may be combined in any suitable manner in one or more embodiments. In the following description, numerous specific details are provided to give a thorough understanding of embodiments of the present disclosure. However, those skilled in the art will appreciate that the technical solutions of the present disclosure may be practiced while omitting one or more specific details, or employing other methods, components, devices, steps, etc. In other cases, commonly known technical solutions are not shown or described in detail, so as to avoid blurring various aspects of the present disclosure due to a reversal of the order of host and guest.

In addition, the terms "first", "second", or the like are only used for descriptive purposes, and cannot be understood as indicating or implying relative importance or implicitly indicating the number of indicated technical features. Thus, the features defined with "first" and "second" may explicitly or implicitly include one or more of the features. In the description of the present disclosure, the meaning of "a plurality of" is at least two, for example, two, three, etc., unless specifically defined otherwise. The symbol "/" generally indicates that the front and rear associated objects are in a "or" relationship.

In the present disclosure, terms such as "connection" should be construed broadly, unless expressly specified and defined otherwise. For example, it may be electrical connection or communication with each other; and, it may be direct connection or indirect connection through an intermediate medium. For those of ordinary skill in the art, the specific meanings of the above terms in the present disclosure may be understood according to specific situations.

The terms mentioned in the embodiments of the present disclosure are explained below.

Blockchain. A blockchain is a novel application mode of computer technologies such as distributed data storage, point-to-point transmission, consensus mechanism, encryption algorithm and the like. A consensus mechanism is a mathematical algorithm for establishing trust between different nodes in a blockchain system and obtaining rights and interests.

Smart contract. A smart contract is a computer protocol intended to propagate, verify, or execute a contract in an informatization manner. The smart contract allows for trusted transactions without a third party, which can be tracked and irreversible. The smart contract concept was proposed for the first time in 1994 by Nike Szabo.

Electronic acceptance document. An electronic inspection document may replace the original paper acceptance document, which includes specific basic information, product quantity, and detail information of the inspection document such as a warehouse-in acceptance document or a warehouse-out acceptance document.

Personal digital assistant (PDA). A PDA mentioned in the present disclosure is a dedicated PDA for logistics, and needs to have the capability of interaction with the network where the platform is located, the display capability of the electronic signature, and the like. Generally, the PDA uses an Android operating system.

Digital identity. If "Zhang San has a digital identity", it indicates that Zhang San has a pair of public key and private key. The certificate issuing authority of the digital identity can prove that the holder corresponding to the public key is Zhang San. It is proved that the holder corresponding to the public key is the signature person through endorsing the digital identity (the public key and the private key) by an authority center (Certificate Authority, CA). It is ensured that the person that performs the signature by using the private key of the device is the signature person through the biological feature (fingerprint input during registration).

Non-Fungible Token (NFT). Being non-fungible represents that it is unique. By taking Cryptokitties as an example, each kitty is endowed with a gene, which is unique (one kitty is an NFT), and the kitties cannot be replaced with each other. While, being fungible means that a certain part or quantity can be replaced by another equivalent part or quantity.

As mentioned above, when cargoes among warehouses of different organizations are allocated to each other, real, complete and reliable cargo state data cannot be obtained in real time through a centralized management system. When the cargoes are allocated in the information systems of different organizations, due to lack of a unified view, the real state of a single cargo cannot be positioned, which brings great difficulty to inventory checking. In related art, data interaction is completed between different organizations through tools such as electronic data interchange (EDI) or the like, which may cause of data inconsistency between organizations due to network problems, system faults, or human modification, etc., and the data credibility is low. Therefore, the present disclosure provides a method for processing cargo allocation information, in which: a non-fungible virtual resource corresponding to a warehouse-in cargo including a cargo to be warehouse-out is associated with a wallet address of a first user identification in a blockchain network; warehouse-out information including an identification of the cargo to be warehouse-out and a wallet address of a second user identification in the blockchain network are obtained; authorization is performed on a transfer operation of transferring from the wallet address of the first user identification to the wallet address of the second user identification for a non-fungible virtual resource corresponding to the cargo to be warehouse-out according to the identification of the cargo to be warehouse-out, so as to perform the transfer operation by a second user terminal corresponding to a second user identification. By mapping each cargo during allocation process to the blockchain ledger for circulation as a digital virtual resource, the transfer of the virtual resource corresponding to the actual cargo asset is completed through the blockchain network; the related party obtains the unique data through the blockchain, so that the authenticity and reliability of the cargo allocation data can be ensured, and the problem of inconsistent inventory caused by the defects of traditional paper data interaction is avoided.

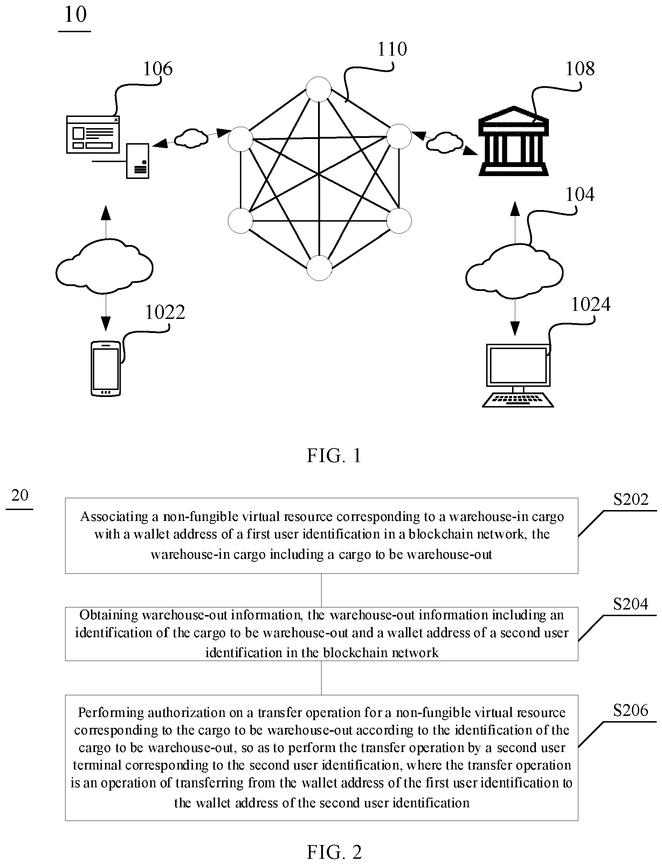

FIG. 1 shows an exemplary system architecture 10 where the method for processing cargo allocation information or the apparatus for processing cargo allocation information of the present disclosure may be applied.

As shown in FIG. 1, the system architecture 10 may include terminal devices 1022 and 1024, a network 104, a business system server 106, a CA server 108, and a blockchain network 110. The terminal devices 1022 and 1024 may be various electronic devices having a display screen and supporting input and output, including but not limited to smart phones, tablet computers, laptop portable computers, desktop computers, wearable devices, virtual reality devices, smart homes, or the like. The network 104 is configured to provide a medium for a communication link between the terminal device 102 and the servers 106 and 108. The network 104 may include various connection types, such as wired, wireless communication links, or optical fiber cables, etc. The business system server 106 and the CA server 108 may be a server or a server cluster providing various business services and authentication services, respectively. The business system may include an order management system (OMS), a warehouse management system (WMS), or the like, where business data such as cargo information, consignor information, consignee information, carrier information, signing information, or the like, may be managed. The blockchain network 110 may be a peer-to-peer (P2P) network consisting of a plurality of nodes (any form of computing devices accessed in the network, such as a server, a user terminal); the node includes a hardware layer, an intermediate layer, an operating system layer, and an application layer; and, a peer-to-peer application layer protocol running on a transmission control protocol (TCP) is used between the nodes.

The user may interact with the business system server 106 or the CA server 108 through the network 104 by using the terminal device 1022 or 1024 to receive data from the blockchain network 110 or sent data to it. For example, a consignor user uses the terminal device 1022 to perform an authorization operation for virtual resource transfer or generate a warehouse-out document and then upload the warehouse-out document from the business system server 106 to the blockchain network 110 through the network 104. For example, a consignee user performs query on the warehouse-out document in the blockchain network 110 from the business system server 106 through the network 104 by using the terminal device 1022. For another example, a delivery user may perform a digital signature confirmation operation on the signing document on the terminal device 102, and upload the signing document after signed from the CA server 108 to the blockchain network 110 through the network 104.

It should be understood that the number of the terminal device, the network, and the server in FIG. 1 is merely illustrative. According to implementation requirements, there may be any number of terminal devices, networks, and servers.

FIG. 2 is a flowchart of a method for processing cargo allocation information illustrated according to an exemplary embodiment. The method shown in FIG. 2 may be applied to the terminal device 1022 of the above system, that is, the first user terminal corresponding to the first user identification below.

Referring to FIG. 2, the method 20 provided in the embodiment of the present disclosure may include the following steps.

In step S202, a non-fungible virtual resource corresponding to a warehouse-in cargo is associated with a wallet address of the first user identification in the blockchain network, where the warehouse-in cargo includes a cargo to be warehouse-out.

In some embodiments, when the cargo is stored in the warehouse for the first time, the warehouse-in cargo is mapped onto the blockchain network to obtain the non-fungible virtual resources corresponding to the warehouse-in cargo.

In some embodiments, the first user may be a consignor (or referred to as an original cargo owner) in the present cargo allocation, and the execution subject for mapping the cargo to the non-fungible virtual resource in the blockchain network may be a business system terminal of a warehouse where the cargo is stored in the warehouse for the first time. The wallet address is a storage location identification of the user's virtual resource in the blockchain network, which may be disclosed to all nodes in the blockchain; the wallet address is a string of character strings in essence, can be established when the user joins the blockchain network, and can be associated with the account of the business system where the user is located.

In some embodiments, the warehouse-in cargo may be mapped to a non- fungible virtual resource of the blockchain network through invoking a non-fungible virtual resource protocol. For example, ECR 721 protocol may be employed, which may also be invoked when the non-fungible virtual resource is associated with the wallet address of the first user identification. For example, when there are 10 pieces of cargo into the source warehouse of the first user, the method for associating the 10 pieces of cargo with their wallet address 001 is as follows:
*constructor (uint initSupply =10 & mapping (address => 001) balances.*

In some embodiments, for example, a wallet address may be established for a first user and associated with an account of the first user (i.e., a first user identification) in its business system; a wallet address (e.g., 002) may be established for a second user (i.e., the consignee, or referred to as a new cargo owner), and associated with an account of the second user (i.e., a second user identification) in its business system. The first user and the second user may be in the same business system or different business systems, which are connected to the server in the blockchain network through corresponding terminals.

In step S204, warehouse-out information is obtained, the warehouse-out information including an identification of the cargo to be warehouse-out and a wallet address of the second user identification in the blockchain network.

In some embodiments, the cargo allocation order information including the cargo allocation information and the second user information may be obtained, the identification of the cargo to be warehouse-out may be obtained according to the cargo allocation information, and the wallet address of the second user identification may be obtained according to the second user information. The cargo allocation order information of the customer may be obtained through an EDI data exchange system, and the identification of the cargo to be warehouse-out and the wallet address of the second user identification of the consignee for the virtual resource transfer operation may be obtained from the cargo allocation order information of the customer. The association relationship between the cargo allocation information and the identification of the cargo to be warehouse-out, and the association relationship between the second user information and the wallet address of the second user identification can be recorded and stored in the business system where the first user is located.

In some embodiments, the first user terminal corresponding to the first user identification may generate a warehouse-out document according to the cargo allocation order information, and upload the warehouse-out document to the blockchain network through the server. For example, the source warehouse accepts an instruction to allocate 5 pieces of cargo to a destination warehouse, and generates an electronic warehouse-out document which is written into the blockchain ledger for evidence storage by the warehouse node connected to the source warehouse. The server verifies whether the client is legal based on the account information and the certificate information, and is responsible for invoking the blockchain node smart contract. When the server uploads the warehouse-out document to the blockchain, the server may perform a digital fingerprint operation (Hash (sign(Doc.Pk))) on the warehouse-out document to obtain a hash value of the content in the warehouse-out document, and then upload the hash value to the blockchain so as to verify whether the corresponding content is distorted.

In step S206, authorization is performed on the transfer operation of the non-fungible virtual resource corresponding to the cargo to be warehouse-out according to the identification of the cargo to be warehouse-out, so as to perform the transfer operation by the second user terminal corresponding to the second user identification, where the transfer operation is an operation of transferring from the wallet address of the first user identification to the wallet address of the second user identification.

In some embodiments, the association relationship between the identification of the cargo to be warehouse-out and the non-fungible virtual resource corresponding to the cargo to be warehouse-out may also be recorded and stored in the business system where the first user is located.

In some embodiments, authorization may be performed on the transfer operation of the non-fungible virtual resource corresponding to the cargo to be warehouse-out according to the identification of the cargo to be warehouse-out through invoking the non-fungible virtual resource protocol. For example, after the delivery personnel delivers the cargoes, the warehouse receiver of the consignee operates the detail to store them in warehouse through its business system terminal (the second user terminal corresponding to the second user identification), and determines that the three pieces of them are normally in the warehouse, and the two pieces are rejected due to damage. When it is possible to be stored in warehouse, the authorization operation for completing the virtual resource transfer at the terminal through invoking ERC721 protocol is as follows:
*event Approval (address indexed owner, address indexed approved, uint256 indexed_tokenId).*

Among them, *address indexed owner* is the wallet address of the first user identification, *address indexed approved* is the wallet address of the second user identification, and *uint256 indexed tokenlD* is the identification of the non-fungible virtual resource corresponding to the cargo to be warehouse-out with 256 bits. The authorization operation for the virtual resource transfer of the three pieces of cargo can be performed for three times; or, the authorization operation for the virtual resource transfer of the pieces of cargoes can also be performed in batches, that is, the authorization operation for the virtual resource transfer of the three pieces of cargo is completed at once.

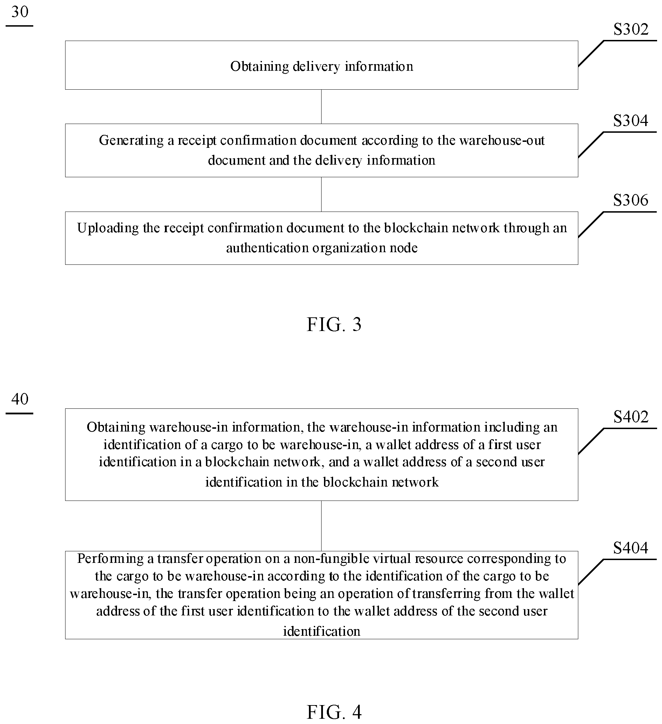

A specific embodiment of performing an operation when the delivery personnel delivers the cargoes may be referred to FIG. 3. A specific embodiment of performing a transfer operation by the second user terminal corresponding to the second user identification may be referred to FIG. 4.

In some embodiments, query is performed on the non-fungible virtual resource associated with the wallet address of the first user identification through invoking the non-fungible virtual resource protocol, and/or query is performed on the non-fungible virtual resource associated with the wallet address of the second user identification through invoking the non-fungible virtual resource protocol. For example, the original cargo owner and the new cargo owner complete checking of inventory through the wallet terminals, and respectively invoke ERC721 protocol through the respective terminals to complete query of the non-fungible token and the ownership. The operation is as follows:
*function balanceOf (address owner) external view returns(uint256).*

Among them, *address_owner* is a wallet address to be queried.

In some embodiments, the warehouse-out document in the blockchain network may be associated with a transfer operation according to the first user identification; for example, a link of the warehouse-out document in the blockchain network may be associated with a record of the transfer operation authorized by the first user. According to FIG. 4, the corresponding warehouse-in confirmation document may also be associated with the record of the transfer operation authorized by the second user, such that the source warehouse, the destination warehouse, the delivery personnel and other related parties can synchronize the electronic signature data through the blockchain, and the electronic document data on the blockchain is real and unique.

In some other embodiments, the warehouse-out document, the warehouse-in confirmation document, or the like may also be stored separately with the non-fungible virtual resources on the blockchain, and be associated with them in the business system off the blockchain.

According to the method for processing cargo allocation information provided by the embodiments of the present disclosure, an alliance chain is established among all participants of the supply chain allocation based on the blockchain ledger and the consensus mechanism, and meanwhile, each piece of cargo in the allocation process is mapped into the blockchain ledger by utilizing the blockchain protocol to serve as a non-fungible virtual resource for circulation, and at the same time, transfer of the virtual resource is completed through the blockchain protocol. The non-fungible virtual resource of the blockchain is used as the unique resource corresponding to the cargo on the blockchain, and the related party obtains the unique data through the blockchain, so that the uniqueness and reliability of the asset are ensured, the problem of inconsistent inventory caused by insufficient traditional data interaction is avoided, and the multi-party reconciliation process is eliminated.

FIG. 3 is a flowchart of another method for processing cargo allocation information illustrated according to an exemplary embodiment. The method shown in FIG. 3 may be applied to the terminal device 1024 of the above system, that is, the terminal of the delivery personnel verified by the CA server.

Referring to FIG. 3, the method 30 provided by the embodiment of the present disclosure may include the following steps.

In step S302, delivery information is obtained.

In some embodiments, a delivery personnel may obtain a cargo delivery task from the EDI system through a terminal (such as a PDA); for example, the task is to deliver 5 pieces of cargo to be warehouse-out of the consignor to the consignee, then deliver the 5 pieces of cargo to a destination warehouse of the designated consignee, and perform a delivery operation by completing confirmation of the number of cargo with the consignee, so as to obtain actual delivery data; if 5 pieces of cargo are actually delivered successfully, the delivery data is the details of the 5 pieces of cargo; and if the 3 pieces of cargo of them are actually delivered successfully, the delivery data is the details of the 3 pieces of cargo.

In step S304, a receipt confirmation document is generated according to the warehouse-out document and the delivery information.

In some embodiments, the electronic receipt document is formed according to the actual delivery data, and the electronic signature is completed on the PDA through the digital certificate of the delivery personnel to generate a receipt confirmation document.

In step S306, the receipt confirmation document is uploaded to the blockchain network through an authentication organization node.

In some embodiments, the receipt confirmation document may be written into the blockchain ledger for evidence storage by the organization node (such as a CA node server) where the deliver personnel are located. For a specific implementation manner of the CA node server to write the receipt confirmation document into the blockchain ledger, reference may be made to the description of writing the electronic warehouse-out document into the blockchain by the storage node server in step S204, and details are not described here again.

According to the method for processing cargo allocation information provided in the embodiments of the present disclosure, a traditional paper receipt document operation process is replaced with an electronic receipt document process on the basis of the blockchain, so as to ensure that the information flow is integrated with the real object flow and the document flow in the ownership transfer process of the cargo; the responsibility of the receipt subject can be clarified by returning the electronic signature, the signature subject is determined by using the digital certificate signature, realizing that the receipt person subject is real, and the receipt process is credible.

FIG. 4 is a flowchart of still another method for processing cargo allocation information illustrated according to an exemplary embodiment. The method shown in FIG. 4 may be, for example, applied to the terminal device 1022 of the above system, that is, the second user terminal corresponding to the second user identification below.

Referring to FIG. 4, the method 40 provided by the embodiment of the present disclosure may include the following steps.

In step S402, warehouse-in information is obtained, the warehouse-in information including an identification of a cargo to be warehouse-in, a wallet address of a first user identification in a blockchain network, and a wallet address of a second user identification in the blockchain network.

In some embodiments, cargo allocation order information including cargo allocation information and first user information is obtained, an identification of the cargo to be warehouse-in is obtained according to the cargo allocation information, and a wallet address of the first user identification is obtained according to the first user information. The cargo allocation order information of the customer can be obtained through the EDI data exchange system, and the identification of the cargo to be warehouse-in and the wallet address of the first user identification of the consignor used for the virtual resource transfer operation are obtained from the cargo allocation order information of the customer. The association relationship between the cargo allocation information and the identification of the cargo to be warehouse-in, and the association relationship between the first user information and the wallet address of the first user identification may be recorded and stored in the business system where the first user is located.

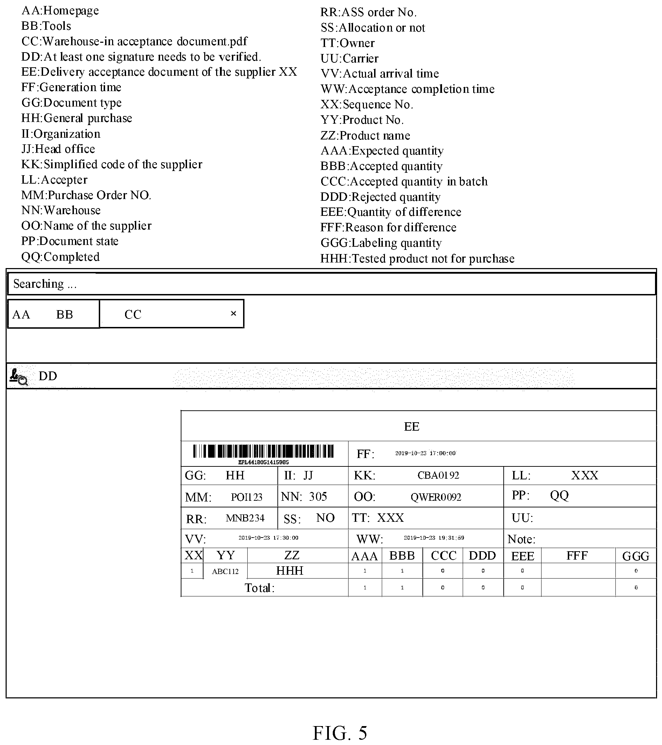

In some embodiments, the second user terminal corresponding to the second user identification may generate a warehouse-in confirmation document based on the cargo allocation order information, and then upload the warehouse-in confirmation document to the blockchain network through the server. After completion of warehouse-in, if there is no difference in the comparison result of the delivery detail and the warehouse-in detail, the consignee of the destination warehouse (the second user) completes the warehouse-in confirmation operation on the terminal (PDA / PC, Personal Computer), completes signature of the electronic warehouse-in confirmation document and then performs the uplink operation for evidence storage through the business system server where the second user is located. The specific implementation manner of writing the warehouse-in confirmation document into the blockchain ledger by the second user business system server may refer to the description of writing the electronic warehouse-out document into the blockchain by the warehouse node server in step S204, and details are not described here again. FIG. 5 shows a schematic diagram of a warehouse-in confirmation document. As shown in FIG. 5, the warehouse-in confirmation document (a warehouse-in acceptance document) may be in a PDF format, and may include waybill information such as the supplier, the accepter, the purchase order number, the cargo owner, the carrier, the advanced shipment notice (ASN) order number, time, product-related information, or the like. The signature of the consignee may be verified.

In step S404, a transfer operation is performed on a non-fungible virtual resource corresponding to the cargo to be warehouse-in according to the identification of the cargo to be warehouse-in, the transfer operation being an operation for transferring from the wallet address of the first user identification to the wallet address of the second user identification.

In some embodiments, the transfer operation is performed on the non-fungible virtual resources corresponding to the cargo to be warehouse-in through invoking the non-fungible virtual resource protocol. For example, after the delivery personnel delivers the cargoes, the consignee in the destination warehouse performs the detailed warehouse-in operation through the existing terminal system, determines that the three pieces are normally in the warehouse, and two pieces are rejected due to damage. The virtual resource transfer operation of the 3 pieces of cargo is completed by invoking ERC721 protocol as follows:
*3 times *event Transfer (address indexed owner, address indexed approved, uint256 indexed_tokenId).*

Among them, one transfer operation is performed on the three pieces of cargo respectively. The additional two rejected cargoes may be returned by taking a reverse collection process, a warehouse-in operation may be performed in the system firstly, and then a warehouse-out operation may be performed; that is, taking the second user as the consignor in the allocation and the first user as the consignee, the above allocation process is performed again.

According to the method for processing cargo allocation information provided in the embodiments of the present disclosure, the cargo is mapped as the virtual resource for uploading on the blockchain and confirming the ownership through the blockchain ledger technology. After the real object is changed, transfer of the virtual resource is completed in the blockchain ledger through the smart contract, with less fraud and commercial friction. The related parties such as the source warehouse, the destination warehouse, the delivery personnel, or the like can synchronize the electronic signature data through the blockchain, and complete the inventory and auditing processes of the cargo through the blockchain ledger technology, ensuring that the real object asset is in one-to-one correspondence with the blockchain virtual resource, and the electronic document data on the blockchain is real and unique, so as to ensure the authenticity, integrity and reliability of the cargo related data.

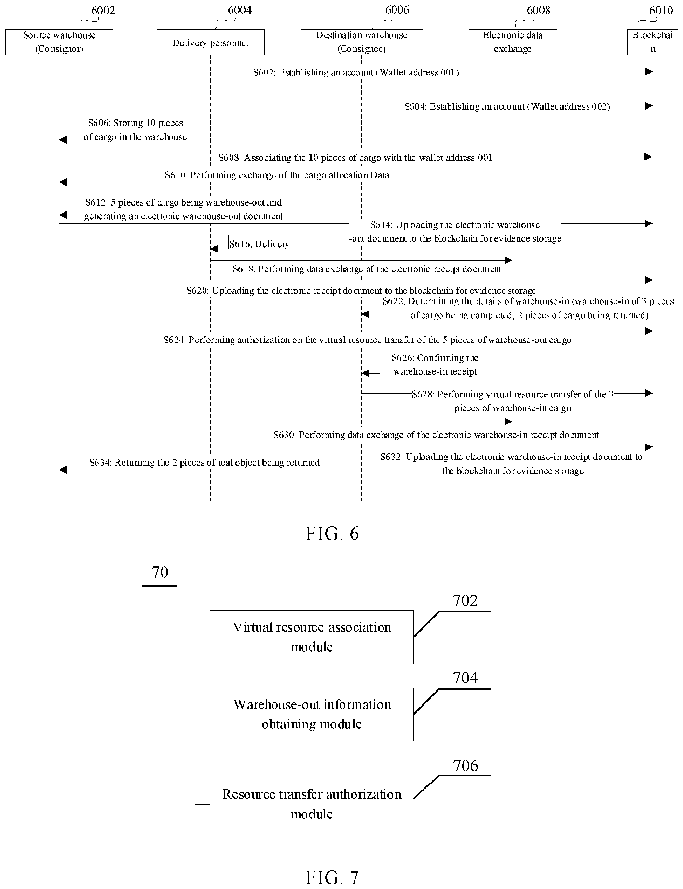

FIG. 6 is an information interaction diagram for cargo allocation illustrated according to an exemplary embodiment. As shown in FIG. 6, the information interaction is as follows.

In S602, the source warehouse (consignor) 6002 establishes a wallet address 001 and associates it with its account in the blockchain network 6010.

In S604, the destination warehouse (consignee) 6006 establishes a wallet address 002 and associates it with its account in the blockchain network 6010.

In S606, the source warehouse 6002 store 10 pieces of cargo in the warehouse.

In S608, the source warehouse 6002 associates the token corresponding to the 10 pieces of warehouse-in cargo with its wallet address 001.

In S610, the source warehouse 6002 obtains the cargo allocation data from the EDI 6008.

In S612, the source warehouse 6002 makes 5 pieces of cargo being warehouse-out according to the cargo allocation data and generates an electronic warehouse-out document.

In S614, the source warehouse 6002 uploads the electronic warehouse-out document to the blockchain for evidence storage.

In S616, the delivery personnel 6004 obtains the delivery data.

In S618, the delivery personnel 6004 performs digital signature on the receipt document according to the actual delivery data, and performs data exchange of the electronic receipt document through the EDI 6008.

In S620, the delivery personnel 6004 uploads the electronic receipt document to the blockchain for evidence storage.

In S622, the destination warehouse 6006 determines the warehouse-in details (warehouse-in of 3 pieces of cargo being completed, 2 pieces of cargo being returned).

In S624, the source warehouse 6002 performs authorization on the virtual resource transfer of the 5 pieces of warehouse-out cargo.

In S626, the destination warehouse 6006 performs receipt confirmation on the 3 pieces of warehouse-in cargo and generates an electronic warehouse-in receipt document.

In S628, the destination warehouse 6006 performs virtual resource transfer of the 3 pieces of warehouse-in cargo.

In S630, the destination warehouse 6006 performs data exchange of the electronic warehouse-in receipt document through the EDI 6008.

In S632, the destination warehouse 6006 uploads the electronic warehouse-in receipt document to the blockchain for evidence storage.

In S634, the destination warehouse 6006 returns the 2 pieces of real object being returned to the source warehouse 6002.

FIG. 7 is a block diagram of an apparatus for processing cargo allocation information illustrated according to an exemplary embodiment. For example, the apparatus shown in FIG. 7 may be applied to the terminal device 1022 of the above system, that is, the first user terminal corresponding to the first user identification below.

Referring to FIG. 7, the apparatus 70 provided in the embodiment of the present disclosure may include a virtual resource association module 702, a warehouse-out information obtaining module 704, and a resource transfer authorization module 706.

The virtual resource association module 702 may be configured to associate a non-fungible virtual resource corresponding to a warehouse-in cargo to a wallet address of the first user identification in a blockchain network, the warehouse-in cargo including a cargo to be warehouse-out.

The warehouse-out information obtaining module 704 may be configured to obtain warehouse-out information, the warehouse-out information including an identification of the cargo to be warehouse-out and a wallet address of a second user identification in the blockchain network.

The resource transfer authorization module 706 may be configured to perform authorization on a transfer operation for a non-fungible virtual resource corresponding to the cargo to be warehouse-out according to the identification of the cargo to be warehouse-out, so as to perform the transfer operation by a second user terminal corresponding to the second user identification, where the transfer operation is an operation of transferring from the wallet address of the first user identification to the wallet address of the second user identification.

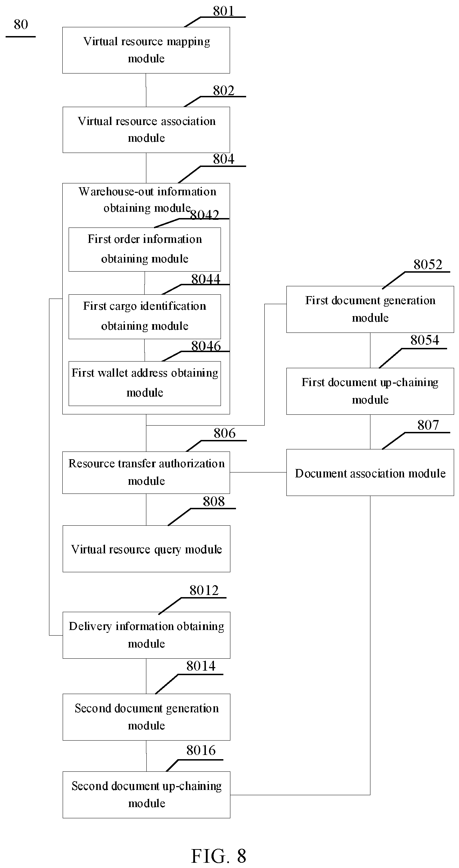

FIG. 8 is a block diagram of another apparatus for processing cargo allocation information illustrated according to an exemplary embodiment. For example, the apparatus shown in FIG. 8 may be applied to the terminal device 1022 of the above system, that is, the first user terminal corresponding to the first user identification below.

Referring to FIG. 8, the apparatus 80 provided in the embodiment of the present disclosure may include a virtual resource mapping module 801, a virtual resource association module 802, a warehouse-out information obtaining module 804, a first document generation module 8052, a first document up-chaining module 8054, a resource transfer authorization module 806, a document association module 807, a virtual resource query module 808, a delivery information obtaining module 8012, a second document generation module 8014, and a second document up-chaining module 8016. The warehouse-out information obtaining module 804 may include a first order information obtaining module 8042, a first cargo identification obtaining module 8044, and a first wallet address obtaining module 8046.

The virtual resource mapping module 801 may be configured to obtain the non-fungible virtual resource corresponding to the warehouse-in cargo by mapping the warehouse-in cargo onto the blockchain network through invoking a non-fungible virtual resource protocol.

The virtual resource association module 802 may be configured to associate the non-fungible virtual resources corresponding to the warehouse-in cargo with the wallet address of the first user identification in the blockchain network, and the warehouse-in cargo includes a cargo to be warehouse-out.

The virtual resource association module 802 may be further configured to associate the non-fungible virtual resources corresponding to the warehouse-in cargo with the wallet address of the first user identification in the blockchain network through invoking a non-fungible virtual resource protocol.

The warehouse-out information obtaining module 804 may be configured to obtain warehouse-out information, the outbound information including an identification of the cargo to be warehouse-out and a wallet address of a second user identification in the blockchain network.

The first order information obtaining module 8042 may be configured to obtain cargo allocation order information, the cargo allocation order information including cargo allocation information and second user information.

The first cargo identification obtaining module 8044 may be configured to obtain an identification of the cargo to be warehouse-out according to the cargo allocation information.

The first wallet address obtaining module 8046 may be configured to obtain a wallet address of the second user identification according to the second user information.

The first document generation module 8052 may be configured to generate a warehouse-out document according to the cargo allocation order information.

The first document up-chaining module 8054 may be configured to upload the warehouse-out document to the blockchain network through the server.

The resource transfer authorization module 806 may be configured to perform authorization on a transfer operation for the non-fungible virtual resource corresponding to the cargo to be warehouse-out according to the identification of the cargo to be warehouse-out, so as to perform the transfer operation by a second user terminal corresponding to the second user identification, where the transfer operation is an operation of transferring from the wallet address of the first user identification to the wallet address of the second user identification.

The resource transfer authorization module 806 may be further configured to perform authorization on a transfer operation for the non-fungible virtual resources corresponding to the cargo to be warehouse-out according to the identification of the cargo to be warehouse-out through invoking a non-fungible virtual resource protocol.

The document association module 807 may be configured to associate the warehouse-out document in the blockchain network with the transfer operation according to the first user identification.

The virtual resource query module 808 may be configured to perform query on the non-fungible virtual resource associated with the wallet address of the first user identification through invoking a non-fungible virtual resource protocol; and/or, perform query on the non-fungible virtual resource associated with the wallet address of the second user identification through invoking a non-fungible virtual resource protocol.

The delivery information obtaining module 8012 may be configured to obtain the delivery information.

The second document generation module 8014 may be configured to generate a receipt confirmation document according to the warehouse-out document and the delivery information.

The second document up-chaining module 8016 may be configured to upload the receipt confirmation document to the blockchain network through the authentication organization node.

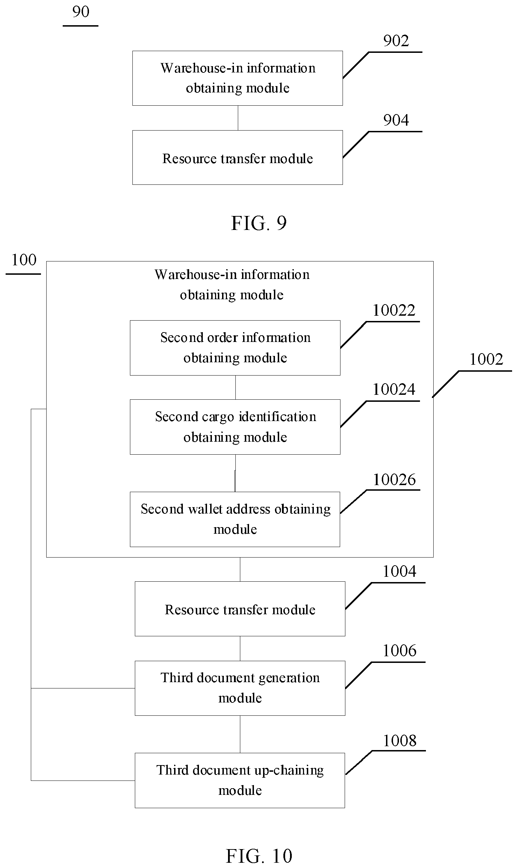

FIG. 9 is a block diagram of still another apparatus for processing cargo allocation information illustrated according to an exemplary embodiment. For example, the apparatus shown in FIG. 9 may be applied to the terminal device 1022 of the above system, that is, the second user terminal corresponding to the second user identification below.

Referring to FIG. 9, the apparatus 90 provided in the embodiment of the present disclosure may include a warehouse-in information obtaining module 902 and a resource transfer module 904.

The warehouse-in information obtaining module 902 may be configured to obtain warehouse-in information, the warehouse-in information including an identification of a cargo to be warehouse-in, a wallet address of a first user identification in the blockchain network, and a wallet address of a second user identification in the blockchain network.

The resource transfer module 904 may be configured to perform a transfer operation on a non-fungible virtual resource corresponding to the cargo to be warehouse-in according to the identification of the cargo to be warehouse-in, the transfer operation being an operation of transferring from the wallet address of the first user identification to the wallet address of the second user identification.

FIG. 10 is a block diagram of still another apparatus for processing cargo allocation information illustrated according to an exemplary embodiment. For example, the apparatus shown in FIG. 10 may be applied to the terminal device 1022 of the above system, that is, the second user terminal corresponding to the second user identification below.

Referring to FIG. 10, the apparatus 100 provided in the embodiment of the present disclosure may include a warehouse-in information obtaining module 1002, a resource transfer module 1004, a third document generation module 1006, and a third document up-chaining module 1008. The warehouse-in information obtaining module 1002 may include a second order information obtaining module 10022, a second cargo identification obtaining module 10024, and a second wallet address obtaining module 10026.

The warehouse-in information obtaining module 1002 may be configured to obtain warehouse-in information, the warehouse-in information including an identification of the cargo to be warehouse-in, a wallet address of a first user identification in the blockchain network, and a wallet address of a second user identification in the blockchain network.

The second order information obtaining module 10022 may be configured to obtain cargo allocation order information, the cargo allocation order information including cargo allocation information and first user information.

The second cargo identification obtaining module 10024 may be configured to obtain an identification of the cargo to be warehouse-in according to the cargo allocation information.

The second wallet address obtaining module 10026 may be configured to obtain a wallet address of the first user identification according to the first user information.

The resource transfer module 1004 may be configured to perform a transfer operation on a non-fungible virtual resource corresponding to the cargo to be warehouse-in according to the identification of the cargo to be warehouse-in, the transfer operation being an operation of transferring from the wallet address of the first user identification to the wallet address of the second user identification.

The third document generation module 1006 may be configured to generate a warehouse-in confirmation document based on the cargo allocation order information.

The third document up-chaining module 1008 may be configured to upload the warehouse-in confirmation document to the blockchain network through the server.

The specific implementation of each module in the apparatus provided in the embodiments of the present disclosure may refer to the content in the above methods, and details are not described here again.

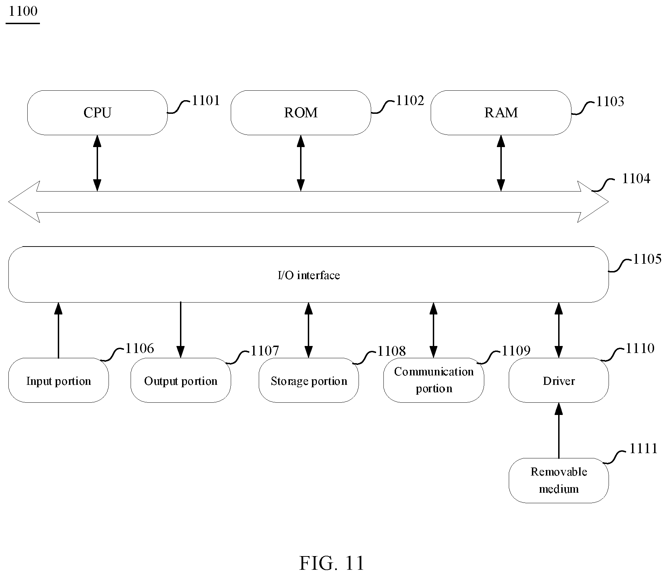

FIG. 11 shows a schematic structural diagram of an electronic device according to an embodiment of the present disclosure. It should be noted that the device shown in FIG. 11 merely takes a computer system as an example, and should not bring any limitation to the functions and use ranges of the embodiments of the present disclosure.

As shown in FIG. 11, the device 1100 includes a central processing unit (CPU) 1101 that may perform various appropriate actions and processing in accordance with the programs stored in a read-only memory (ROM) 1102 or the programs loaded from the storage portion 1108 into the random access memory (RAM) 1103. In the RAM 1103, various programs and data needed for the operation of the device 1100 are also stored. The CPU 1101, the ROM 1102, and the RAM 1103 are connected to each other through a bus 1104. An input/output (I/O) interface 1105 is also connected to bus 1104.

The following components are connected to the I/O interface 1105: an input portion 1106 including a keyboard, a mouse, or the like; an output portion 1107 including a cathode ray tube (CRT), a liquid crystal display (LCD), or the like, and a speaker; a storage portion 1108 including a hard disk or the like; and a communication portion 1109 including a network interface card such as a LAN card, a modem, or the like. The communication portion 1109 performs communication processing via a network such as the Internet. The driver 1110 is also connected to the I/O interface 1105 as needed. The removable medium 1111, such as a magnetic disk, an optical disc, a magneto-optical disc, a semiconductor memory, or the like, is installed on the driver 1110 as needed so that the computer program read from the removable medium 1111 is installed into the storage portion 1108 as needed.

In particular, according to embodiments of the present disclosure, the process described above with reference to the flowchart may be implemented as a computer software program. For example, embodiments of the present disclosure include a computer program product, which includes a computer program carried on a computer readable medium, and the computer program includes program code for performing the method shown in the flowchart. In such embodiments, the computer program may be downloaded and installed from the network through the communication portion 1109 and/or installed from the removable medium 1111. When the computer program is executed by the central processing unit (CPU) 1101, the above functions defined in the system of the present disclosure are performed.

It should be noted that the computer-readable medium shown in the present disclosure may be a computer-readable signal medium or a computer-readable storage medium, or any combination of the above. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that includes or stores with a program that may be used by or in connection with an instruction execution system, apparatus, or device. In the present disclosure, a computer-readable signal medium may include a data signal propagated in a baseband or as part of a carrier, where a computer-readable program code is carried. Such a propagated data signal may take a variety of forms, including but not limited to, an electromagnetic signal, an optical signal, or any suitable combination of the above. The computer-readable signal medium may also be any computer-readable medium other than a computer-readable storage medium, and the computer-readable medium may send, propagate, or transmit a program used by or in connection with an instruction execution system, apparatus, or device. The program code contained on the computer-readable medium may be transmitted by any suitable medium, including but not limited to wireless, wire, optical cable, RF, etc., or any suitable combination of the above.

The flowcharts and block diagrams in the drawings illustrate the system architecture, functionality, and operation of possible implementations of systems, methods, and computer program products according to various embodiments of the present disclosure. In this regard, each block in the flowcharts or block diagrams may represent a module, a program segment, or a portion of code. The above module, program segment, or portion of code includes one or more executable instructions for implementing the specified logical functions. It should also be noted that, in some alternative implementations, the functions noted in the block may occur in a different order from that noted in the drawings. For example, two blocks represented in succession may, in fact, be executed substantially in parallel, which may sometimes also be executed in a reverse order, depending upon the functionality involved. It should also be noted that each block in the block diagrams or flowcharts, and combinations of blocks in the block diagrams or flowcharts, may be implemented with dedicated hardware-based systems that perform the specified functions or operations, or may be implemented with a combination of dedicated hardware and computer instructions.

The modules described and involved in the embodiments of the present disclosure may be implemented in a software manner, or may be implemented in a hardware manner. The described modules may also be provided in a processor, for example, they may be described as that a processor includes a virtual resource association module, a warehouse-out information obtaining module, and a resource transfer authorization module. Among them, the names of these modules do not constitute a limitation on the module itself in some cases; for example, the virtual resource association module may also be described as "a module for associating a non-fungible virtual resource corresponding to a cargo with a wallet address in a blockchain network".

As another aspect, the present disclosure further provides a computer-readable medium. The computer-readable medium may be included in the device described in the above embodiments, or may exist alone, but is not assembled into the device. The computer-readable medium carries one or more programs, and when the one or more programs are executed by a device, the device is enabled to include:

associating a non-fungible virtual resource corresponding to a warehouse-in cargo with a wallet address of a first user identification in a blockchain network, the warehouse-in cargo including a cargo to be warehouse-out; obtaining warehouse-out information, the warehouse-out information including an identification of the cargo to be warehouse-out and a wallet address of a second user identification in the blockchain network; and, performing authorization on a transfer operation for the non-fungible virtual resources corresponding to the cargo to be warehouse-out according to the identification of the cargo to be warehouse-out, so as to perform the transfer operation by a second user terminal corresponding to the second user identification, where the transfer operation is an operation of transferring from the wallet address of the first user identification to the wallet address of the second user identification.

Example embodiments of the present disclosure are shown and described above. It should be understood that the present disclosure is not limited to the detailed structures, arrangement manners, or implementation methods described here; by contrast, the present disclosure is intended to cover various modifications and equivalent arrangements included within the spirit and scope of the appended claims.

## Claims

1. A method for processing cargo allocation information, comprising:
associating a non-fungible virtual resource corresponding to a warehouse-in cargo with a wallet address of a first user identification in a blockchain network, the warehouse-in cargo comprising a cargo to be warehouse-out;
obtaining warehouse-out information, the warehouse-out information comprising an identification of the cargo to be warehouse-out and a wallet address of a second user identification in the blockchain network; and
performing authorization on a transfer operation for a non-fungible virtual resource corresponding to the cargo to be warehouse-out according to the identification of the cargo to be warehouse-out, so as to perform the transfer operation by a second user terminal corresponding to the second user identification, wherein the transfer operation is an operation of transferring from the wallet address of the first user identification to the wallet address of the second user identification.

2. The method according to claim 1, further comprising:
obtaining the non-fungible virtual resource corresponding to the warehouse-in cargo by mapping the warehouse-in cargo onto the blockchain network through invoking a non-fungible virtual resource protocol;
associating the non-fungible virtual resource corresponding to the warehouse-in cargo with the wallet address of the first user identification in the blockchain network comprises:
associating the non-fungible virtual resource corresponding to the warehouse-in cargo with the wallet address of the first user identification in the blockchain network through invoking the non-fungible virtual resource protocol;
performing authorization on the transfer operation for the non-fungible virtual resource corresponding to the cargo to be warehouse-out according to the identification of the cargo to be warehouse-out comprises:
performing authorization on the transfer operation for the non-fungible virtual resource corresponding to the cargo to be warehouse-out according to the identification of the cargo to be warehouse-out through invoking the non-fungible virtual resource protocol.

3. The method according to claim 2, further comprising:
performing query on the non-fungible virtual resource associated with the wallet address of the first user identification through invoking the non-fungible virtual resource protocol; and/or
performing query on a non-fungible virtual resource associated with the wallet address of the second user identification through invoking the non-fungible virtual resource protocol.

4. The method according to claim 1, wherein obtaining the warehouse-out information comprises:
obtaining cargo allocation order information, the cargo allocation order information comprising cargo allocation information and second user information;
obtaining the identification of the cargo to be warehouse-out according to the cargo allocation information; and
obtaining the wallet address of the second user identification according to the second user information;
wherein, the method further comprises:
generating a warehouse-out document according to the cargo allocation order information; and
uploading the warehouse-out document to the blockchain network through a server.

5. The method according to claim 4, further comprising:
associating the warehouse-out document in the blockchain network with the transfer operation according to the first user identification.

6. The method according to claim 4, further comprising:
obtaining delivery information;
generating a receipt confirmation document according to the warehouse-out document and the delivery information; and
uploading the receipt confirmation document to the blockchain network through an authentication organization node.

7. A method for processing cargo allocation information, comprising:
obtaining warehouse-in information, the warehouse-in information comprising an identification of a cargo to be warehouse-in, a wallet address of a first user identification in a blockchain network, and a wallet address of a second user identification in the blockchain network; and
performing a transfer operation on a non-fungible virtual resource corresponding to the cargo to be warehouse-in according to the identification of the cargo to be warehouse-in, the transfer operation being an operation of transferring from the wallet address of the first user identification to the wallet address of the second user identification.

8. The method according to claim 7, wherein obtaining the warehouse-in information comprises:
obtaining cargo allocation order information, the cargo allocation order information comprising cargo allocation information and first user information;
obtaining the identification of the cargo to be warehouse-in according to the cargo allocation information; and
obtaining the wallet address of the first user identification according to the first user information;
wherein, the method further comprises:
generating a warehouse-in confirmation document based on the cargo allocation order information; and
uploading the warehouse-in confirmation document to the blockchain network through a server.

9. An apparatus for processing cargo allocation information, comprising:
a virtual resource association module, configured to associate a non-fungible virtual resource corresponding to a warehouse-in cargo with a wallet address of a first user identification in a blockchain network, the warehouse-in cargo comprising a cargo to be warehouse-out;
a warehouse-out information obtaining module, configured to obtain warehouse-out information, the warehouse-out information comprising an identification of the cargo to be warehouse-out and a wallet address of a second user identification in the blockchain network; and
a resource transfer authorization module, configured to perform authorization on a transfer operation for a non-fungible virtual resource corresponding to the cargo to be warehouse-out according to the identification of the cargo to be warehouse-out, so as to perform the transfer operation by a second user terminal corresponding to the second user identification, wherein the transfer operation is an operation of transferring from the wallet address of the first user identification to the wallet address of the second user identification.

10. A device, comprising: a memory, a processor, and an executable instruction stored in the memory and executable in the processor, wherein the method according to any one of claims 1 to 8 is implemented when the processor executes the executable instruction.

11. A computer-readable storage medium, with an executable instruction by a computer stored thereon, wherein the method according to any one of claims 1 to 8 is implemented when the executable instruction is executed by a processor.
